# EUROPÄISCHE PATENTSCHRIFT

(11) **EP 0 974 704 B1**
(45) Veröffentlichungstag und Bekanntmachung des Hinweises auf die Patenterteilung: **23.01.2002**
(21) Anmeldenummer: 99250241.9
(22) Anmeldetag: 19.07.1999
(51) Int. Cl.: E03F 3/04

(54) **Verfahren zur Auswechselung von mit Einbauteilen versehenen Entwässerungskanälen**
Method to replace parts of sewer channels that comprise in-built elements
Méthode pour le remplacement partiel de canalisations comprenant des éléments incorporés

(30) Priorität: 23.07.1998 DE 19835034
(43) Veröffentlichungstag der Anmeldung: 26.01.2000
(73) Patentinhaber: Berliner Wasserbetriebe Anstalt des öffentlichen Rechts, 10179 Berlin (DE)
(72) Erfinder: Gaebelein, Wilhelm, Dr.-ing., 14163 Berlin (DE); Röling, Michael, Dipl.-Ing., 12157 Berlin (DE)

(56) Entgegenhaltungen:
- FR-A- 2 346 500
- GB-A- 2 124 728
- US-A- 1 765 999
- PATENT ABSTRACTS OF JAPAN vol. 1998, no. 05, 30. April 1998 (1998-04-30) & JP 10 002481 A (SHINOZAKI HARUHIKO), 6. Januar 1998 (1998-01-06)

## Beschreibung

Die Erfindung betrifft ein Verfahren zur Auswechselung schadhafter Teile von Entwässerungskanälen, die mit Einbauteilen, beispielsweise Lichtwellenleiter (LWL) - Kabel, versehen sind.

Es ist bekannt, die vorhandenen Kanäle der Ver- und Entsorgungsunternehmen für die Verlegung der für die Telekommunikation erforderlichen Kabel zu nutzen (DE 42 03 718). Dabei sind die Kabel an der Rohrinnenwand befestigt.
Beim Auswechseln schadhafter Teile der Entwässerungskanäle muss gewährleistet sein, dass das Kabel im Entwässerungskanal verbleibt, weiter betrieben werden kann und nicht beschädigt wird, und nach dem Einbringen des neuen Kanalteiles wieder fest in die Innenwandung anliegt, um zu verhindern, dass sich Schmutzteile an den Kabeln festsetzen.

Weiterhin ist nach der Veröffentlichung JP 10002481 A1 ein Verfahren für die Reparatur schadhafter Entwässerungskanäle mit innenseitig angeordnetem Kabel gemäss dem Oberbegrift der Anspruchs 1 bekannt. Nachteilig hierbei ist, dass entweder das Kabel nach dem Einbau der Halbschalen nur nachträglich von innen mittels Befestigungselemente durch einen Roboter auf unwirtschaftliche Weise befestigt oder das Kabel im Zuge des Einbaus der oberen Halbschale in den bereits vorher in der oberen Halbschale befestigten Haken eingeklinkt wird, wobei bei dieser Befestigungstechnologie das Kabel nicht unmittelbar an der Rohrinnenwand gehalten wird und somit zwischen den Befestigungspunkten durchhängt. Das führt in der Folge zu Verstopfungen in dem Entwässerungskanal.

Aufgabe der Erfindung ist es, ein Verfahren anzugeben, das ein Auswechseln defekter Kanalteile, in denen Einbauteile, beispielsweise LWL-Kabel, vorhanden sind, ermöglicht und gewährleistet, dass die Einbauteile danach wieder fest an der Innenwand des Kanals anliegen.

Erfindungsgemäß wird die Aufgabe dadurch gelöst, dass die neu einzubauenden Kanalteile in an sich bekannter Weise aus vorgefertigten Halbschalen, vorzugsweise gleicher Form und gleichen Durchmesser wie der ursprüngliche Kanal eingebracht werden, wobei die obere Halbschale mit einer oder mehreren Öffnungen versehen ist, durch die ein flexibles Befestigungselement eingeführt, um das Einbauteil herumgeführt, durch dieselbe oder eine andere Öffnung wieder nach außen geführt wird, danach festgezurrt wird und anschließend die Öffnungen mit selbstaushärtendem Dichtungsmaterial verschlossen werden, oder auch durch ein starres Befestigungselement eingeführt, das Einbauteil in das Befestigungselement eingeklinkt, und dieses mit dem Einbauteil dicht an die Innenwand der oberen Halbschale geführt und befestigt wird, und anschließend die Öffnungen mit selbstaushärtendem Dichtungsmaterial verschlossen werden.
Eine weitere Ausgestaltung der Erfindung sieht die Verwendung eines Abdecktellers als Schalung gegen das Durchdrücken der Dichtungsmasse vor und/oder die Einbringung einer zusätzlichen Dichtung innerhalb der Öffnung. Damit wird ein möglicher Durchtritt von Flüssigkeiten im Fugenbereich der Öffnung verhindert.
Das Befestigungselement kann ein Band, Gurt, Seil, Draht, Clip, Zange oder Haken mit glatter, geriffelter oder sonstiger profilierter Oberfläche sein.
Vorteile der Erfindung sind, daß beim Auswechseln defekter Kanalteile die an sich bekannte und bewährte Technologie mit angepaßten Halbschalen eingesetzt werden kann, und eine von außen durchführbare, einfache und sichere Befestigung der Einbauteile ermöglicht wird.

Die Erfindung soll nachstehend in drei Ausführungsbeispielen näher erläutert werden.

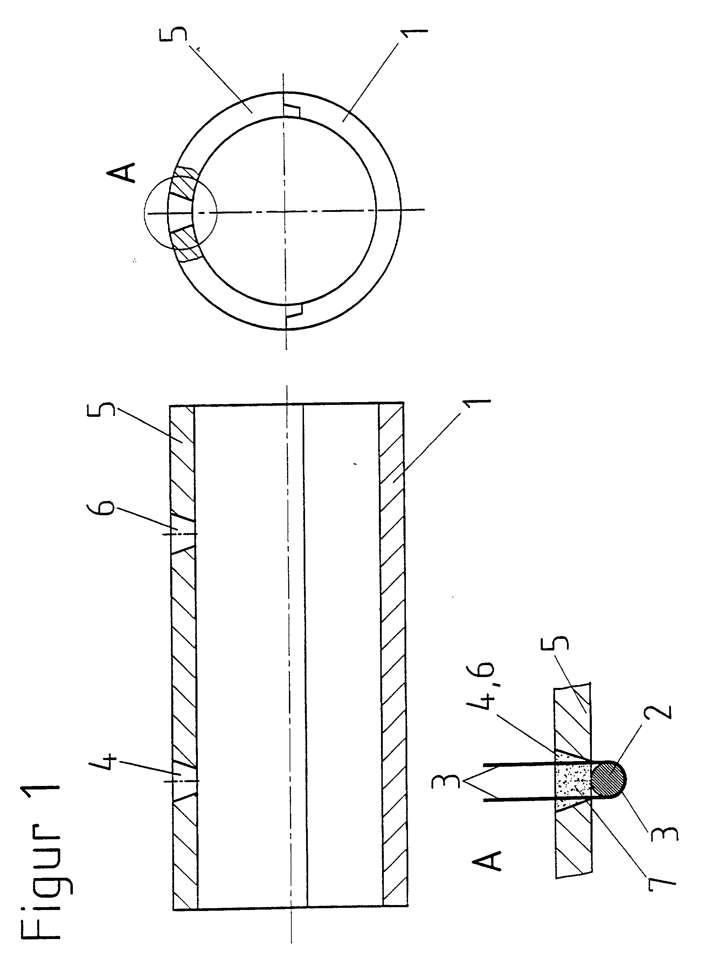

- Fig. 1: zeigt die Befestigung eines LWL-Kabels mit konischen Öffnungen der oberen Halbschale
- Fig. 2: zeigt die Befestigung eines LWL-Kabels mit abgestuften Öffnungen der oberen Halbschale
- Fig. 3: zeigt die Befestigung eines LWL-Kabels mit hakenförmiger Aufnahmevorrichtung und Füllmasse in konischer Öffnung.

Nach dem Freilegen des Kanals durch Herstellen eines Rohrgrabens erfolgt das Entfernen des schadhaften Kanals ohne Beschädigung des Kabels. Anschließend wird eine an sich bekannte untere Halbschale 1 an Stelle des defekten Kanalteiles unterhalb des LWL-Kabels 2 eingebracht. Danach wird das Befestigungselement 3 um das LWL-Kabel 2 gelegt und die beiden losen Enden durch die Öffnung 4 in der oberen Halbschale 5 hindurchgeführt.
Nach dem Aufsetzen der oberen Halbschale 5 auf die untere Halbschale 1 erfolgt die Abdichtung der Fugen zwischen den Halbschalen und den angrenzenden bereits vorhandenen Rohren mit an sich bekannten Abdichtungsverfahren.
Durch Straffziehen der aus den Öffnungen 4 und 6 ragenden Enden der Befestigungsbänder 3 wird das LWL-Kabel 2 an die Wand der oberen Halbschale 5 geführt. Zur endgültigen Sicherung der Befestigungsbänder 3 und gleichzeitig des Kabels 2 werden unter gleichzeitigem straffen Festhalten der Enden der Befestigungsbänder 3 die Öffnungen 4 und 6 mit einer nicht schwindenden Füll- und Dichtmasse 7 verschlossen. Nach dem Abbinden und Aushärten der Füll- und Dichtmasse 7 wird der Rohrgraben geschlossen.

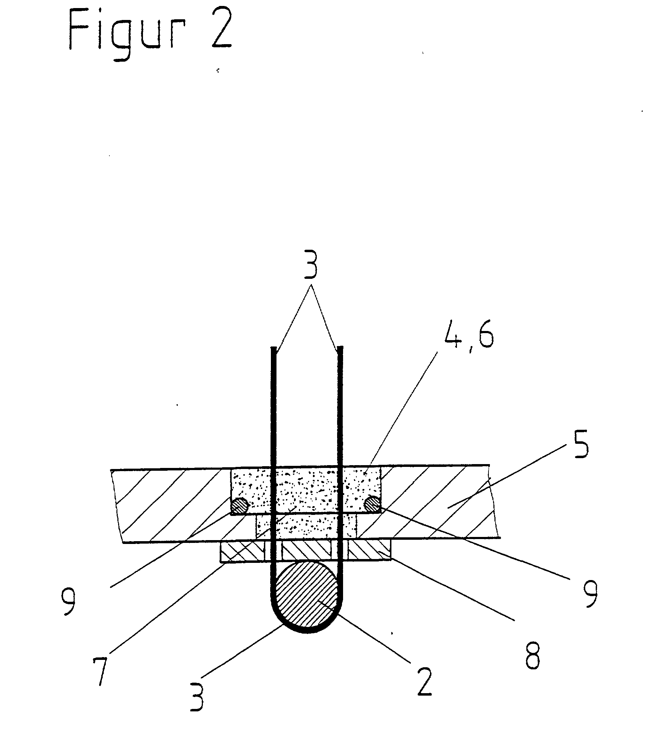

Das zweite Ausführungsbeispiel zeigt in Fig. 2 ein Verfahren, bei dem ebenfalls die Befestigung der Einbauteile mittels Befestigungsband und Füllmasse erfolgt, jedoch in abgestufter Öffnung und unter Verwendung einer zusätzlichen Dichtung innerhalb der Öffnung und unter Verwendung eines zusätzlichen inneren Abdecktellers.
Die Befestigung des LWL-Kabels 2 erfolgt wie im Ausführungsbeispiel 1, jedoch werden vor dem Durchführen der Enden der Befestigungsbänder 3 durch die Öffnungen 4 und 6 in der oberen Halbschale 5 zwei mit jeweils zwei Löchern versehene Abdeckteller 8 auf die Enden der Befestigungsbänder 3 aufgefädelt. Durch das spätere Straffziehen der Enden der Befestigungsbänder 3 werden unter gleichzeitigem Heranführen des Kabels 2 die inneren Abdeckteller 8 gegen die innere Wand der oberen Halbschale 5 gezogen und dichten die Öffnungen 4 und 6 ab.
Vor dem Verschließen der Öffnungen 4 und 6 mit Füll- und Dichtmasse 7 werden in die Öffnungen 4 und 6 jeweils ein quellfähiges Dichtungselement 9, beispielsweise ein an sich an sich bekannter Quellgummi so eingelegt, daß die Dichtungselemente 9 unmittelbar an den Wandungen der Öffnungen 4 und 6 anliegen.

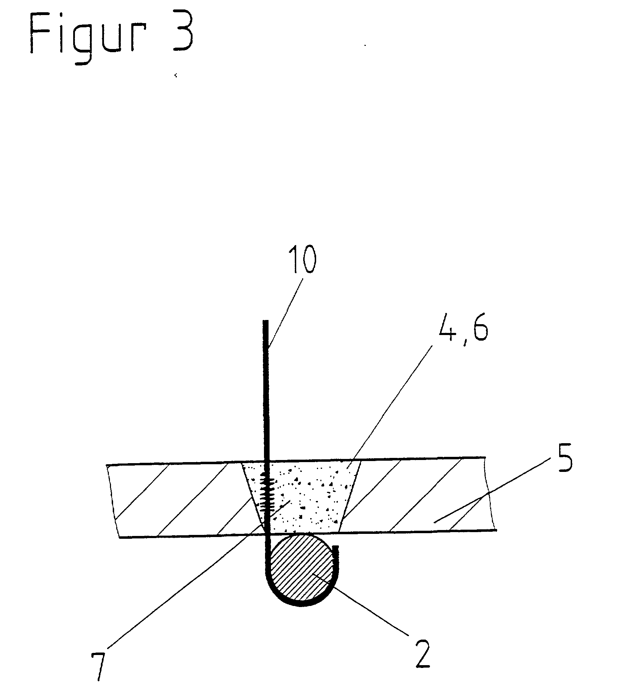

Das dritte Ausführungsbeispiel zeigt in Fig. 3 ein Verfahren, bei dem die Befestigung der Einbauteile mittels einer hakenförmigen Aufnahmevorrichtung und Füllmasse in konischer Öffnung erfolgt.
Zur Befestigung des LWL-Kabels 2 wird durch die Öffnungen 4 und 6 in der oberen Halbschale 5 jeweils eine hakenförmige Aufnahmevorrichtung 10 geschoben, das LWL-Kabel 2 darin eingehakt, und durch Ziehen der hakenförmigen Aufnahmevorrichtung 10 das LWL-Kabel 2 an die Innenwand der oberen Halbschale 5 geführt. Das Verschließen der Öffnungen 4 und 6 erfolgt analog zum Ausführungsbeispiel 1.

## Patentansprüche

1. Verfahren zur Auswechselung schadhafter Teile von Entwässerungskanälen, die mit Einbauteilen, beispielsweise Lichtwellenleitern oder LWL-Kabeln versehen sind, wobei der schadhafte Kanal entfernt wird, wobei die neu einzubauenden Kanalteile in an sich bekannter Weise aus in der benötigten Länge vorgefertigten Halbschalen, vorzugsweise gleicher Form und gleichen Durchmessers eingebracht werden, **dadurch gekennzeichnet, dass** die obere Halbschale mit einer oder mehreren Öffnungen (4; 6) versehen ist, durch die ein flexibles Befestigungselement (3) eingeführt, um das Einbauteil (2) herumgeführt und durch dieselbe oder eine andere Öffnung (4; 6) wieder nach außen geführt und danach festgezurrt wird, und anschließend die Öffnungen (4; 6) mit Dichtungsmaterial (7) verschlossen werden, oder durch die ein starres Befestigungselement (10) eingeführt, das Einbauteil (2) in das Befestigungselement (10) eingeklinkt und dieses anschließend mit dem Einbauteil (2) dicht an die Innenwand der oberen Halbschale geführt und befestigt wird, und anschließend die Öffnungen (4; 6) mit selbstaushärtendem Dichtungsmaterial (7) verschlossen werden.

2. Verfahren nach dem Anspruch 1,
**dadurch gekennzeichnet, daß**
die Öffnungen (4; 6) mit einem zusätzlichen inneren Abdeckteller (8) versehen werden.

3. Verfahren nach den Ansprüchen 1 und 2,
**dadurch gekennzeichnet, daß**
ein zusätzliches Dichtungselement (9) in die Öffnungen (4; 6) eingebracht wird.

4. Verfahren nach dem Anspruch 1,
**dadurch gekennzeichnet, daß**
das Befestigungselement als ein Band (3), Gurt, Seil, Draht, Clip, Zange, oder Haken (10) mit glatter, geriffelter oder sonstiger profilierter Oberfläche ausgebildet ist.

## Claims

1. Method of exchanging defective parts of drainage channels, which are provided with incorporated components, for example optical conductors or optical conductor cables, wherein the defective channel is removed and wherein the new channel parts to be installed are introduced in per se known manner from half shells prepared in the requisite lengths, preferably of same shape and diameter, **characterised in that** the upper half shell is provided with one or more openings (4; 6), through which a flexible fastening element (3) is introduced, led around the incorporated component (2), led back outside again through the same or through another opening (4; 6) and thereafter secured, then subsequently the openings (4; 6) are closed by sealing material (7), or through which a rigid fastening element (10) is introduced, the incorporated component (2) is clipped into the fastening element (10) and this together with the incorporated component (2) is led tightly against the inner wall of the upper half shell and fastened, and subsequently the openings (4; 6) are closed with self-hardening sealing material (7).

2. Method according to claim 1, **characterised in that** the openings (4; 6) are provided with an additional inner cover plate (8).

3. Method according to claims 1 and 2, **characterised in that** an additional sealing element (9) is introduced into the openings (4; 6).

4. Method according to claim 1, **characterised in that** the fastening element is constructed as a strip (3), belt, cable, wire, clip, tongue or hook (10) with smooth, corrugated or other profiled surface.

## Revendications

1. Procédé pour remplacer des parties défectueuses de canalisations d'évacuation d'eaux usées comportant des pièces incorporées tels que des guides de lumière ou des câbles à guide de lumière,
procédé selon lequel on élimine la canalisation défectueuse, on met en place les parties de canalisation nouvelles à intégrer, formées de demi-coquilles préfabriquées à la longueur nécessaire, ayant de préférence la même forme et le même diamètre,
**caractérisé en ce qu'**
on munit la demi-coquille supérieure d'une ou plusieurs ouvertures (4, 6) à travers lesquelles on introduit un élément de fixation souple (3), on le fait passer autour de la pièce incorporée (2) et on le ressort à travers cette ouverture ou par une autre ouverture (4, 6) et on serre puis on ferme les ouvertures (4, 6) avec un matériau d'étanchéité (7) ou encore on introduit dans les ouvertures un élément de fixation rigide (10), on insère la pièce (2) dans l'élément de fixation (10) et ensuite on place cet élément avec la pièce formant insert (2), étroitement contre la paroi intérieure de la demi-coquille supérieure et on la fixe, et ensuite on ferme les ouvertures (4, 6) avec une matière d'étanchéité (7) autodurcissante.

2. Procédé selon la revendication 1,
**caractérisé en ce qu'**
on munit les ouvertures (4, 6) d'un opercule intérieur (8) supplémentaire.

3. Procédé selon l'une quelconque des revendications 1 et 2,
**caractérisé en ce qu'**
on introduit un élément d'étanchéité (9) supplémentaire dans les ouvertures (4, 6).

4. Procédé selon la revendication 1,
**caractérisé en ce qu'**
on réalise l'élément de fixation sous la forme d'une bande (3), d'une ceinture, d'un câble, d'un filin, d'un clip, d'une pince ou de crochets (10) avec une surface lisse, moletée ou ayant un autre profil.
